Europäisches Patentamt

European Patent Office

Office européen des brevets

(19)

(11) EP 0 671 808 B1

## (12) EUROPÄISCHE PATENTSCHRIFT

(45) Veröffentlichungstag und Bekanntmachung des Hinweises auf die Patenterteilung:
**20.06.2001 Patentblatt 2001/25**

(51) Int Cl.[7]: **H02M 5/458**, H02M 7/48, H02M 7/5387

(21) Anmeldenummer: **95103359.6**

(22) Anmeldetag: **08.03.1995**

(54) **Verfahren zum Ansteuern eines Wechselrichters und Anordnung zur Durchführung des Verfahrens**

Method for driving an inverter and device for carrying out the method

Procédé pour commander un onduleur et dispositif mettant en oeuvre le procédé

(84) Benannte Vertragsstaaten:
**DE FR GB IT**

(30) Priorität: **11.03.1994 DE 4408325**

(43) Veröffentlichungstag der Anmeldung:
**13.09.1995 Patentblatt 1995/37**

(73) Patentinhaber: **Infineon Technologies AG
81669 München (DE)**

(72) Erfinder: **Reiner, Robert, Dipl.-Ing.
D-82008 Unterhaching (DE)**

(74) Vertreter: **Zedlitz, Peter, Dipl.-Inf. et al
Patentanwalt,
Postfach 22 13 17
80503 München (DE)**

(56) Entgegenhaltungen:
**EP-A- 0 252 898          EP-A- 0 255 258
US-A- 4 685 042**

## Beschreibung

Die Erfindung betrifft ein Verfahren zum Ansteuern eines Wechselrichters eines Umrichters gemäß dem Oberbegriff des Anspruchs 1 und eine Anordnung zur Durchführung des Verfahrens gemäß dem Oberbegriff des Anspruchs 3.

Umrichter für Spannung und Frequenzen sind beispielsweise zum Betrieb von Drehstrommotoren mit variabler Drehzahl erforderlich. Der Aufbau eines solchen Umrichters besteht meist aus einer Gleichrichtung der Netzwechselspannung, z.B. des 50 Hz Wechsel- oder Drehstroms, einem Gleichspannungszwischenkreis, der z.B. aus einem Kondensator zur Zwischenspeicherung der Energie besteht, und einem Wechselrichter, z.B. einer Steuereinrichtung zur Erzeugung der gewünschten Steuerimpulse für eine dreiphasige Leistungsbrücke und aus eben dieser Leistungsbrücke.

Der Gleichrichter versorgt den Zwischenkreis leider nicht gleichmäßig mit Strom, sondern mit Strompulsen. Bei einer Belastung des Zwischenkreises durch den Wechselrichter entsteht dadurch im Zwischenkreis eine Spannungsschwankung mit einem Vielfachen, z.B. dem Zweifachen, der Netzwechselspannung und dies kann sich nachteilig auf die erzeugte Wechselspannung auswirken. Da derartige Schwankungen in der Frequenz im Hörbereich liegen, können z.B. störende Brummgeräusche im Motor auftreten.

Für langsame Schwankungen reicht es aus, diese z.B. mit einem Analog-Digital-Wandler zu messen und über einen Controller die Vorgaben für den Wechselrichter so zu berechnen, daß über das Tastverhältnis eine Kompensation der Spannungsschwankung erfolgt, also daß die effektive Ausgangsspannung des Umrichters nicht mehr von der Höhe der Zwischenkreisspannung abhängt.

Der Nachteil dieses Verfahrens ist, daß für schnelle Vorgänge, wie sie z.B. bei der Gleichrichtung einer einphasigen Wechselspannung auftreten, die Verarbeitungszeit zu lange ist, die Nachführung des Tastverhältnisses also zu spät erfolgt.

Aus der EP-A-0 252 898 ist eine gattungsgemäße Wechselrichterschaltung bekannt, bei der die Zwischenkreisspannung gemessen und in der Ansteuerung des Wechselrichters durch Pulsdauermodulation berücksichtigt wird.

Aufgabe der vorliegenden Erfindung ist es daher, ein Verfahren zum Ansteuern eines Umrichters und eine Anordnung zur Durchführung des Verfahrens anzugeben, die den obigen Nachteil nicht aufweist.

Diese Aufgabe wird durch den kennzeichnenden Teil des Anspruchs 1 bzw. des Anspruchs 3 gelöst. Weiterbildungen sind Kennzeichen der Unteransprüche.

Vorteil des erfindungsgemäßen Verfahrens ist, daß die Spannung im Zwischenkreis auf einfache Weise für jede Periode des Wechselrichters gemessen wird und noch während dieser Periode die Vorgaben für den Wechselrichter berechnet werden, so daß der kompensierte Wert für das Tastverhältnis in der nächsten Periode bereits zur Ausführung gelangt. Die Perioden können dabei so kurz sein, daß Schaltfrequenzen des Wechselrichters über den Hörbereich erreicht werden können.

Die Erfindung wird nachfolgend anhand von zwei Figuren näher erläutert.

Es zeigen:

Figur 1 ein Prinzipschaltbild einer erfindungsgemäßen Anordnung,

Figur 2 ein Ablaufdiagramm für eine erfindungsgemäße Berechnung der Ansteuersignal eines Wechselrichters.

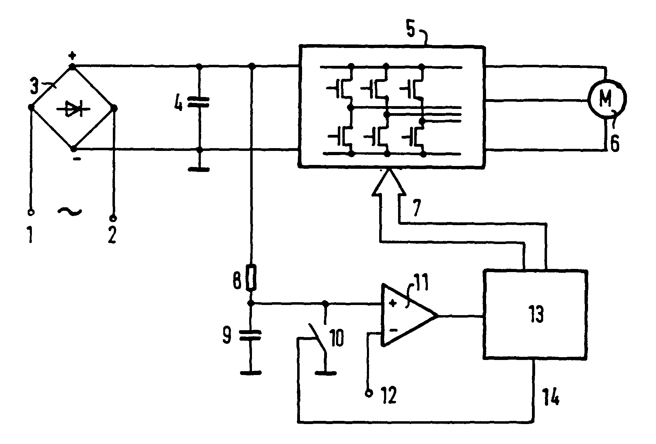

In Figur 1 sind mit 1 und 2 Anschlußklemmen bezeichnet, denen eine gleichzurichtende Wechselspannung zuführbar ist. Diese ist eingangsseitig mit einem Brückengleichrichter 3 verbunden. Der Brückengleichrichter 3 ist ausgangsseitig mit einem Kondensator 4 sowie einer Umrichtereinheit 5 verschaltet. Die Umrichtereinheit 5 weist im dargestellten Beispiel sechs Steuereingänge und drei Schaltausgänge auf. Die drei Schaltausgänge sind mit den drei Anschlüssen eines Drehstrommotors 6 verbunden. Die Spannung am Zwischenkreis wird über einen Widerstand 8 abgegriffen und einem Kondensator 9 zugeführt, der mit Masse verbunden ist. Die Spannung am Kondensator 9 wird dem nichtinvertierenden Eingang eines Komparators 11 zugeführt. Ein steuerbarer Schalter 10 ist vorgesehen, der zwischen nichtinvertierendem Eingang und Masse geschaltet ist. Der invertierende Eingang des Komparators 11 ist mit einer Anschlußklemme 12 verschaltet. Der Ausgang des Komparators 11 ist mit einer Verarbeitungseinheit 13 verbunden, welche einen ersten Steuerausgang 14 aufweist, dessen Ausgangssignal zur Steuerung des steuerbaren Schalters 10 verwendet wird. Ausgänge 7 sind vorgesehen, die zur Steuerung der Umrichtereinheit 5 dienen.

Die Messung der Zwischenkreisspannung geschieht beispielsweise über eine Single-Slope-Messung, indem die Zwischenkreisspannung über den Widerstand 8 den Kondensator 9 auflädt und die Zeit gemessen wird, bis die Spannung am Kondensator die Schaltschwelle des Komparators 11 überschreitet. Dies entspricht einer nach dem Single-Slope-Prinzip arbeitenden Analog-Digital-Wandlung. Diese Zeit ist unter praktischen Bedingungen ausreichend genau dem Reziprokwert der Zwischenkreisspannung. Selbstverständlich sind auch andere Wandlungsverfahren möglich, die zuvor beschriebene ist jedoch die kostengünstigste.

In der Verarbeitungseinheit 13 wird dieser Wert in einen Mulitplizierer mit dem Amplitudenfaktor, welcher ein Maß für die gewünschte Ausgangsamplitude des Wechselrichters ist, mulitpliziert. Der Multiplizierer ist aus anderen Gründen in der Verarbeitungseinheit 13 bereits notwendig. Damit werden die Tastverhältnisse umgekehrt proportional zur Zwischenkreisspannung gesteuert. Die Motorspannung $U_M$ ergibt sich zu:

$$U_M = \gamma \cdot U_{DC},$$

wobei $U_{DC}$ der Zwischenkreisspannung und $\gamma$ dem "duty cycle" entspricht. Der kompensierte "dutycycle" $\gamma$ ergibt sich zu:

$$\gamma \sim \gamma_0 \cdot \frac{1}{U_{DC}},$$

wobei hier der
gemessene Zeitwert t in die Single-Slope-Messung

$$t = \frac{R_8 \cdot C_9 \cdot U_{12}}{U_{DC}}$$

eingeht. $R_8$ ist hierbei Widerstand 8, $C_9$ ist Kondensator 9, $U_{12}$ ist die Spannung an der Klemme 12 und $U_{DC}$ die Zwischenkreisspannung am Kondensator 4.

Das Verfahren arbeitet dann besonders schnell, wenn nur der letzte Teil einer Periode zur Messung der Zwischenkreisspannung herangezogen wird.

Der letzte Teil einer Periode, während dem auch die Berechnung durchgeführt wird, kann dann zum Entladen des erwähnten Kondensators 9 verwendet werden, damit der nächste Meßwert nicht durch Restladung verfälscht wird. Selbstverständlich können auch andere Teile der Periode, die nicht zur Messung benutzt werden, zum Entladen des Kondensators 9 verwendet werden.

Das Single-Slope-Verfahren besitzt bekannte Nachteile: Das Meßergebnis wird von den Streuungen der Bauelemente, des Vorwiderstandes 8, sowie des Kondensators 9 und der Schaltschwelle des Komparators 11 beeinflußt. Die Zeitbasis mit der die Verarbeitungs-Einheit 13 arbeitet, beeinflußt ebenfalls das Meßergebnis, dies ist aber von untergeordneter Rolle, da sie in den meisten Fällen quarzgenau ist.

In einer Weiterbildung des oben beschriebenen Verfahrens kann es daher von Vorteil sein, wenn neben der erwähnten Multiplikation noch eine Korrekturmultiplikation in der Berechnung erfolgt, wobei der Korrekturfaktor diese Streuungen berücksichtigt. Der Korrekturfaktor läßt sich automatisch ermitteln, indem in die Initialisierunsroutine und/oder zu regelmäßigen Zeitpunkten später eine Messung der Zwischenkreisspannung sowohl mit Hilfe eines Analog-Digital-Wandlers wie auch durch den Single-Slope-Wandler erfolgt und sich durch Vergleich der Korrekturfaktor ermitteln läßt. Diese Messung kann zu einem geeigneten Zeitpunkt durchgeführt werden, wenn keine schnellen Schwankungen der Zwischenkreisspannung auftreten.

Dadurch ist kein Abgleich während der Produktion oder der Wartung erforderlich.

Bei der schnellen Berechnung der kompensierten Tastverhältnisse läßt sich Zeit sparen, wenn die Multiplikation mit dem Korrekturfaktor schon durchgeführt wird, während die Zwischenkreisspannung noch gemessen wird.

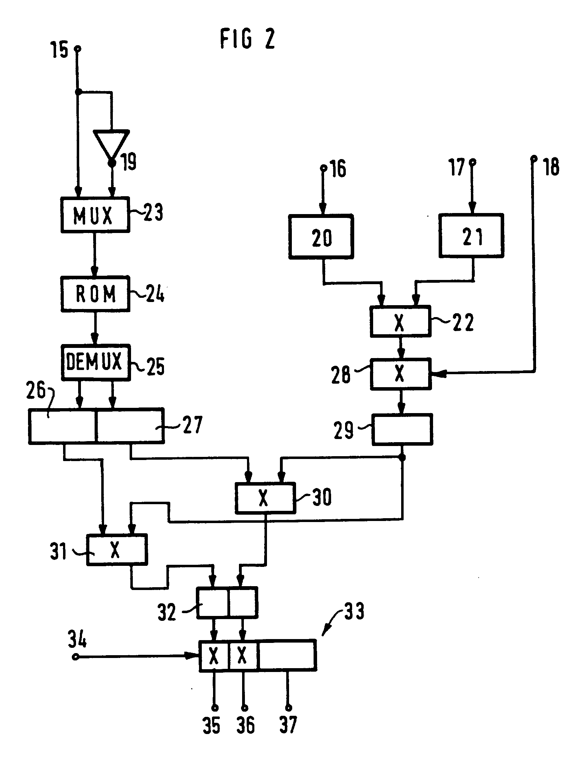

Der Ablauf zur Steuerung eines Umrichters 5 gemäß Figur 1 wird anhand des Ablaufdiagramms in Figur 2 näher erläutert. In Figur 2 ist mit 15 eine Anschlußklemme bezeichnet, der der Drehwinkelwert des Motors 6 zugeführt wird. Diese Anschlußklemme 15 ist mit dem ersten Eingang eines Multiplexers 23 und über Inverter 19 mit dem zweiten Eingang des Multiplexers 23 verbunden. Der Inverter 19 stellt mehrere Inverter dar, für jedes Bit einen. Dadurch wird der Komplementärwert zu 15 gebildet und an den Multiplexer 23 gelegt. Der Ausgang des Multiplexers 23 ist mit einem Speicher 24 verbunden, indem Sinuswerte abgespeichert sind. Der Ausgang des Speichers ist mit einem Demultiplexer 25 verschaltet. Die Ausgänge des Demultiplexers 25 sind jeweils mit Registern 26 und 27 verbunden, deren Ausgänge jeweils dem ersten Eingang eines Multiplizierers 30 bwz. 31 zugeführt werden. Mit 16 ist eine weitere Anschlußklemme bezeichnet, der der Amplitudensollwert zugeführt wird. Dieser ist mit einem Register 20 verbunden. Mit 17 ist eine Anschlußklemme bezeichnet, der ein Korrekturwert zuführbar ist und die mit einem weiteren Register 21 verbunden ist. Der Ausgang des Registers 20 und des Registers 21 werden einem Multiplizierer 22 zugeführt. Der Ausgang des Multiplizierers 22 wird dem ersten Eingang eines weiteren Multiplizierers 28 zugeführt. Der zweite Eingang des Multiplizierers 28 ist mit einer Anschlußklemme 18 verbunden, der der gewandelte Wert der Zwischenkreisspannung zuführbar ist. Der Ausgang des Multiplizierers 28 ist mit einem Register 29 verschaltet, welches derart ausgebildet sein kann, daß es eine Begrenzung des vom Multiplizierer 28 gelieferten Werts vornimmt. Der Ausgang dieses Register 29 ist mit dem zweiten Eingang des Multiplizierers 30 und dem zweiten Eingang des Multiplizierers 31 verbunden. Die Ausgänge der Multiplizierer 30 und 31 werden dann wiederum einer Begrenzeranordnung 32 zugeführt und durch die nachfolgend geschaltete Multiplizier/Berechnungseinheit 33 werden die eigentlichen Pulsweiten Modulationssignale an den Ausgängen 35, 36 und 37 bereitgestellt. Dem Multiplizier/Berechnungseinheit 33 wird über eine Eingangklemme 34 die Periodendauer des Schaltsignals zugeführt.

Die Berechnung in den jeweiligen Signalpfaden der Einheiten 15 bis 27 bis zu den Multiplizierern 30 und 31 bzw. Multiplizierer 28 kann prallel durchgeführt werden. Sie erfolgt am Anfang einer Periode, bei der auch mittels des Single-Slope-Wandlers die AD-Wandlung durchgeführt wird. Steht das Ergebnis des AD-Wandlers an der Klemme 18 bereit, so kann die übrige Berechnung erfolgen und gleichzeitig der Kondensator 9 des Single-Slope-Wandlers entladen werden, bis die neue Periode beginnt.

Im Multiplizierer 22 wird die Sollamplitude mit dem Korrekturwert multipliziert und nachfolgend im Multiplizierer 28 mit dem ermittelten Zwischenkreisspannungswert multipliziert. Durch den Multiplizierer 30 und 31 und der nachgefolgten Schaltung wird in bekannter Weise über eine Sinustabelle, welche in Abhängigkeit des Drehwinkels des Motors 6 ausgelesen wird, die zuvor berechneten Sollwerte derart verknüpft, daß am Ausgang 35, 36, 37 die gewünschten kompensierten pulsweiten Modulationssignale abgreifbar sind. Hierzu werden die beiden Sinuswerte mit den von dem Multiplizierer 28 errechneten Werten multipliziert und in der Einheit 32 begrenzt um eine symetrische Wellenform zu erhalten. Nach der Multiplikation in den Multiplizierern 30 bzw. 31 haben die Werte die Bedeutung "Tastverhältnis" im Bereich 0...1 (dimensionslos). Diese Tastverhältnisse müssen in Einschaltzeiten umgerechnet werden. Dies geschieht durch Multiplikation mit der Periodendauer des Schaltsignals der Brückentransistoren, welche über die Klemme 34 der Multiplizier/Berechnungseinheit 33 zugeführt wird. In der Schaltung bedeutet dies die Multiplikation mit der Anzahl der Eingangstakte für eine Periode. Die Ergebnisse sind dann die Anzahl der Takte für drei verschiedene Schaltzustände der Brücke. Für den Ausgang 35 wird die Periodendauer des Schaltsignals von Klemme 34 mit dem jeweiligen Ausgangswert der Einheiten 31, 32 multipliziert. Für den Ausgang 36 wird die Periodendauer des Schaltsignals von Klemme 34 mit dem Ausgangswert der Einheiten 30, 32 multipliziert, wohingegen der Klemme 37 der Wert Pulsweitenmodulationsgröße abzüglich der an den Klemmen 35 und 36 bereitgestellten Werte durch die Multiplizierer/Berechnungseinheit 33 zugeführt wird.

Eine nachfolgende Schaltung übernimmt die errechneten Taktzahlen und steuert die Brückschaltung nach bewährten und bekannten Modulationsverfahren an (z.B. Raumzeigermodulation).

**Patentansprüche**

1. Anordnung zum Ansteuern eines Wechselrichters (5) eines Umrichters, dem eine gleichgerichtete Wechselspannung zugeführt wird, mit einem Gleichrichter (3), dessen Ausgang mit einem Kondensator (4) und mit dem Eingang eines Wechselrichters (5) verschaltet ist,

   - wobei der Wechselrichter (5) von einer Steuereinheit (13) angesteuert wird,
   - wobei ein nach dem Single-Slope-Prinzip arbeitender Analog/Digital-Wandler (8...11) vorgesehen ist, der die Spannung am Kondensator (4) ermittelt und der Steuereinheit (13) zuführt,

   - wobei die Steuereinheit (13) ein Rechenwerk zur Ermittlung des Tastverhältnisses aufweist, durch das der Reziprokwert der Spannung des Kondensators (4) sowie dessen Multiplikation mit einem vorgegebenen Amplitudenfaktor ausführbar ist und durch diesen Wert das Tastverhältnis gesteuert wird.

2. Anordnung nach Anspruch 1, wobei dem Kondensator (9) des Single-Slope-Analog/Digital-Wandlers ein Schalter (10) parallel geschaltet ist, der derart angesteuert wird, daß er während des letzten Teils einer Periode der Schaltzustände des Wechselrichters (5) den Kondensator (9) entlädt.

3. Verfahren zum Ansteuern eines Wechselrichters (5) unter Verwendung eines Umrichters nach einem der Ansprüche 1 oder 2,

   - wobei während einer Periode von Schaltzuständen des Wechselrichters (5) der Reziprokwert der gleichgerichteten Wechselspannung ermittelt wird und mit einem vorgegebenen Amplitudenfaktor multipliziert wird,
   - wobei durch diesen Wert das Tastverhältnis des Wechselrichters (5) gesteuert wird,
   - wobei der berechnete Wert mit einem Korrekturwert multipliziert wird.

**Claims**

1. Arrangement for driving an invertor (5) in a converter to which a rectified AC voltage is supplied, having a rectifier (3) whose output is connected to a capacitor (4) and to the input of an invertor (5),

   - where the invertor (5) is driven by a control unit (13),
   - where an analogue/digital converter (8...11) operating on the basis of the single-slope principle is provided which ascertains the voltage across the capacitor (4) and supplies it to the control unit (13),
   - where the control unit (13) has an arithmetic and logic unit for ascertaining the duty ratio, which can implement the reciprocal value of the voltage on the capacitor (4) and can multiply said value by a prescribed amplitude factor, and this value controls the duty ratio.

2. Arrangement according to Claim 1, where the capacitor (9) in the single-slope analogue/digital converter has a switch (10) connected in parallel with it which is driven such that it discharges the capacitor (9) during the last part of a period of the switching states of the invertor (5).

**3.** Method for driving an invertor (5) using a converter according to one of Claims 1 or 2,

- where, during a period of switching states of the invertor (5), the reciprocal value of the rectified AC voltage is ascertained and is multiplied by a prescribed amplitude factor,
- where this value controls the duty ratio of the invertor (5),
- where the calculated value is multiplied by a correction value.

## Revendications

**1.** Dispositif pour commander un onduleur (5) d'un convertisseur, une tension alternative redressée étant envoyée à l'onduleur, lequel dispositif comporte un redresseur (3) dont la sortie est reliée à un condensateur (4) et à l'entrée d'un onduleur (5),

- dans lequel l'onduleur (5) est commandé par une unité de commande (13),
- dans lequel il est prévu un convertisseur analogique-numérique (8 à 11) qui fonctionne selon le principe single-slope, qui détermine la tension au condensateur (4) et qui l'envoie à l'unité de commande (13),
- dans lequel l'unité de commande (13) comporte une unité de calcul, qui est destinée à déterminer le rapport d'impulsions et qui peut calculer la valeur inverse de la tension du condensateur (4) ainsi qu'effectuer sa multiplication par un facteur d'amplitude prédéterminé et dans lequel le rapport d'impulsions est commandé par cette valeur.

**2.** Dispositif selon la revendication 1, dans lequel un interrupteur (10) est branché en parallèle avec le condensateur (9) du convertisseur analogique-numérique single-slope et dans lequel cet interrupteur est commandé de telle sorte qu'il décharge le condensateur (9) pendant la dernière partie d'une période des états de commutation de l'onduleur (5).

**3.** Procédé pour commander un onduleur (5) en utilisant un convertisseur selon l'une des revendications 1 ou 2,

- dans lequel, pendant une période d'états de commutation de l'onduleur (5), on détermine la valeur inverse de la tension alternative redressée et on la multiplie par un facteur d'amplitude prédéterminé,
- dans lequel on commande au moyen de cette valeur le rapport d'impulsions de l'onduleur (5),
- dans lequel on multiplie la valeur calculée par une valeur correctrice.

FIG 2